# EUROPÄISCHE PATENTSCHRIFT

(11) **EP 1 086 333 B1**
(45) Veröffentlichungstag und Bekanntmachung des Hinweises auf die Patenterteilung: **13.08.2003**
(21) Anmeldenummer: 99927893.0
(22) Anmeldetag: 07.06.1999
(51) Int. Cl.: F16M 5/00

(54) **TEILESATZ ZUM AUFBAU EINER KONSOLE SOWIE VERFAHREN ZUM HERSTELLEN EINER KONSOLE UND ZUM AUFSTELLEN EINER MASCHINE**
KIT FOR BUILDING A CONSOLE AND METHOD FOR PRODUCING A CONSOLE AND FOR INSTALLING A MACHINE
JEU DE PIECES POUR LA CONSTRUCTION D'UNE CONSOLE, ET PROCEDE DE REALISATION D'UNE CONSOLE ET D'INSTALLATION D'UNE MACHINE

(30) Priorität: 15.06.1998 DE 19826246
(43) Veröffentlichungstag der Anmeldung: 28.03.2001
(73) Patentinhaber: Volkswagen Aktiengesellschaft, 38436 Wolfsburg (DE)
(72) Erfinder: STOYE, Wolfgang, D-38518 Gifhorn (DE)
(86) Internationale Anmeldenummer: EP9903906
(87) Internationale Veröffentlichungsnummer: WO99066252

(56) Entgegenhaltungen:
- US-A- 2 631 800

## Beschreibung

Die Erfindung betrifft einen Teilesatz zum Aufbau einer Konsole für die Einrichtung und Lagerung einer auf einem Boden nach einem Ausrichten ortsfest zu positionierenden Maschine, insbesondere einer industriellen Fertigungsmaschine oder eines industrieroboters, mit einer im wesentlichen ebenen Grundplatte, die mit dem Boden verbindbar ist und Befestigungsmittel für die Verbindung mit dem Bodon aufweist, und einer Befestigungsplatte, die Aufnahmemittel zum Verbinden mit einer Ansatzplatte der Maschine aufweist, wobei die Grundplatte unmittelbar oder mittelbar über Distanzmillel mit der Bofestigungsplatte zur Bildung der Konsole verbindbar ist.

Eine derartige Konsole ist aus der US Patentschrift 2 631 800 bekannt und wird zum Aufstellert von Maschinen in der industriellen Fertigung verwendet.

Diese Konsolen weisen eine Grundplatte auf, die auf den Hallenboden aufgelegt wird und dann mit dem Hallenboden meist über Schraubverbindungen verbunden wird. Auf diese Grundplatte wird dann entweder unmittelbar die Befestigungsplatte aufgelegt und mit dieser verbunden oder es werden Distanzmittel zwischen der Grundplatte und der Befestigungsplatte angeordnet, wobei dann die Befestigungsplatte und die Grundplatte über Schweißverbindungen mit den Distanzmitteln verbunden sind. Alternativ werden statt der Schweißverbindungen auch Schraubverbindungen oder andere Verbindungsarten verwendet. Über unterschiedliche Distanzmittel kann die Konsole in der Höhe verstellt werden, durch entsprechendes Ausrichten der Befestigungsplatte vor dem Verbinden mit der Grundplatte bzw. den Befestigungsmitteln kann eine gewisse Justierung der Konsole und der darauf mantierten Maschine in der Ebene des Hallenbodens vorgenommen werden.

Üblicherweise werden die gattungsgemäßen Konsolen für den Aufbau von industriellen Fertigungsstraßen eingesetzt, insbesondere als Unterbau beim Aufstellen von Fertigungsrobotem. Da diese Roboter boi der Umstellung der Fertigung infolge einer Produktweiterentwicklung oder eines Produktwechsels meist umgesetzt werden müssen oder neu eingesetzt werden, müssen die Konsolen häufig geändert und angepaßt werden. Dies ist mit verhältnismäßig hohem Aufwand verbunden, da es sich bei den hierfür verwendeten Teilen meist um Teile des Sondermaschinenbaus handelt, die in Einzelanfertigung oder extrem kleinen Serien gefertigt werden.

Der Nachteil der bekannten Konsolen besteht somit darin, daß eine Mehrzahl von unterschiedlichen Teilen gefertigt werden müssen. So muß beispielsweise die Grundplatte mit Durchgangsbohrungen versehen werden, durch die die Grundplatte mit dem Hallenboden verschraubt werden kann, der hierzu entsprechende Befestigungsmöglichkeiten aufweist. Andererseits muß die Befestigungsplatte zum Beispiel mit Gewindebohrungen versehen werden, die eine Befestigung der Ansatzplatte, also derjenigen Fläche des Roboters bzw. der Maschine, die mit der Konsole verbunden werden soll, ermöglicht. Beide Bearbeitungen werden oft auf einer Maschine durchgeführt, so daß durch den Werkstückwechsel zusätzliche Rüstzeiten entstehen und durch die Bearbeitung zweier Werktücke der Bearbeitungsaufwand zunimmt. Zusätzlich besteht bei einer derartiger Teilevielfalt das Problem, daß diese Teile dem meist weiter entfernten Montageort zugeführt werden müssen, insbesondere bei großen Konsolen, deren Befestigungsplatte bzw. Grundplatte nicht mehr durch Menschen gehoben werden können. Hier müssen mit Kränen zwei schwere Bauteile zum Montageort verbracht werden, was bei Aufbau einer ganzen Fertigungslinie zu einer zusätzlichen Verwechslungsgefahr der einzelnen Teile führen kann.

Aufgabe der Erfindung ist es daher, einen kostengünstigen Teilesatz zum Aufbau der Konsole zu schaffen, der mit einer geringeren Anzahl Bearbeitungen herstellbar ist und leichter zum Einsatzort verbringbar und aufbaubar ist.

Diese Aufgabe wird durch einen Teilesatz nach Anspruch 1 gelöst. Sie Unteransprüche beschreiben bevorzugte Weiterbildungen.

Mit dem erfindungsgemäßen Teilesatz kann nun eine Konsole aus im wesentlichen einem Bauteil oder. falls ein Distanzmittel vorzusehen ist, aus zwei Bauteilgruppen aufgebaut werden. Hierzu wird zunächst die Ausgangsplatte bearbeitet, die den ersten Bereich, der später die Grundplatte bilden wird, und den zweiten Bereich aufweist, der später die Befestigungsplatte bildet wird. Nach Aufspannen dieser Ausgangsplatte, beispielsweise auf ein spanabhebendes Fertigungszentrum, können die Befestigungsmittel der Grundplatte und die Aufnahmemittel der Befestigungsplatte in einem Arbeitsgang eingearbeitet werden. Zusätzliche Rüstzeiten durch den Werkstückwechsel oder durch das Heranziehen einer neuen Bearbeitungsinformation entfallen hierbei. Anschließend wird ein Spalt in die Ausgangsplatte eingearbeitet, wobei hierzu zum Beispiel ein Brennschneidverfahren oder ein Laserstrahlschneidverfahren eingesetzt werden kann. Die so vorproduzierte Ausgangsplatte kann dann zum Montageort transportiert werden. Dieser Transport kann leicht durch die in der Halle üblicherweise vorhandenen Transportmittel erfolgen, wobei durch die erfindungsgemäße Ausgestaltung der Ausgangsplatte statt der Grundplatte und der Befestigungsplatte nunmehr mit der Ausgangsplatte nur noch ein einziges Teil zum Montageort transportiert werden muß. Dies bedeutet in der Praxis meist einen deutlichen Zeitgewinn, da z.B. ein benötigter Kran nicht zurückgefahren werden muß und für den weiteren Transportvorgang verwendet werden muß, sondern sofort für einen weiteren Verwendungszweck zur Verfügung steht. Das erhöhte Gewicht der Ausgangsplatte spielt dagegen im wesentlichen keine Rolle, da die Einzelteile ohnehin so schwer sind, daß sie nicht von Menschen ohne Hebewerkzeuge gehandelt werden können und die Transporteinrichtungen meist über ausreichende Reserven verfügen.

Die beiden Bereiche der Ausgangsplatte, die später die Grund- und Befestigungsplatte bilden, können zur Vereinfachung des Transports durch Stege miteinander verbunden sein. Diese Stege müssen dann vor der Montage durchtrennt werden.

Zum Aufbau der Konsole wird dann zunächst die Grundplatte auf dem Hallenboden befestigt. Dies geschieht wie bisher über die bekannten Schraubverbindungen. Dann wird entweder ein Distanzmittel auf die Grundplatte gelegt, das beispielsweise ein üblicher Hohlzylinder oder auch ein Rahmen aus Blechen sein kann, und mit der Grundplatte verbunden, etwa durch eine Schweißverbindung. Auf dieses Distanzmittel oder auch unmittelbar auf die Grundplatte wird dann die aus der Grundplatte herausgeschnittene Befestigungsplatte gelegt, die hierfür um einen bestimmten Winkel verdreht wird, so daß der äußere Randbereich der Grundplatte zum Teil auf dem Distanzmittel oder auf der Oberseite der Grundplatte so aufliegt, daß zumindest drei Auflagepunkte vorhanden sind, die nicht auf einer Geraden liegen. Nachfolgend wird die Befestigungsplatte, zum Beispiel auch wieder über eine Schweißverbindung, mit dem Unterbau der Konsole verbunden.

Der in die Ausgangsplatte eingearbeitete Spalt wird bevorzugt durch ein industrielles Schneidverfahren eingebracht, wobei die Breite des Spaltes über seine gesamte Länge gleich groß sein kann. Zum Ausschneiden eines anderen Bauteiles kann der Spalt jedoch an einer oder mehreren Stellen auch aufgeweitet sein. Ferner ist es auch möglich, die zum Aufbau der Distanzmittel benötigten Bleche ebenfalls durch Spalte in der Ausgangsplatte vorzuformen. Hierfür würde es sich anbieten, die Bleche für das spätere Distanzstück um die spätere Grundplatte herum anzuordnen, so daß diese dann als Rand abgetrennt und unterteilt werden können. Zwischen den einzelnen Blechen wäre dann ebenfalls ein Spalt vorzusehen, über denn dann zum Beispiel vier Einzelbleche zum Aufbau eines rechteckigen Rahmens als Distanzmittel voneinander abgetrennt sind.
Der zweite Bereich und damit die spätere Befestigungsplatte kann einen im wesentlichen sternartig oder kreuzartig geformten Umfang aufweisen, wobei die Stege dann bevorzugt an den äußeren Bereichen dieser sternartigen oder kreuzartigen Form angeordnet sind. Es können bereits zwei Stege ausreichend sein, obwohl es zum Trennen der beiden Teile praktischer sein wird, mehrere und dann dünnere Stege vorzusehen.

Der Bereich der späteren Befestigungsplatte kann bereits mit weiteren Anbauteilen versehen werden, wie zum Beispiel mit Zentrierstiften, die die Orientierung eindeutig festzulegen vermögen, in der die Ansatzplatte der Maschine an der Befestigungsplatte befestigt werden kann.

Schließlich ist es eine weitere Aufgabe der Erfindung, ein Verfahren zu schaffen, mit dem eine Maschine, insbesondere ein Roboter der industriellen Fertigung sicher und toleranzgenau aufstellbar ist. Diese Aufgabe ist durch ein Verfahren gelöst, bei dem zunächst die Konsole nach einem der oben beschriebenen Verfahren hergestellt wird und dann die durch Herausnehmen der Befestigungsplatte entstandene Ausnehmung mit einem zunächst im wesentlichen flüssigen und später dann erstarrenden Ausgleichsmedium ausgegossen und die Maschine auf der Konsole aufgestellt wird.

Dieses Ausgleichsmedium kann ein fließfähiger Kunststoff sein, der thermisch oder chemisch abbindet und so eine gleichmäßig Krafteinleitung in den Hallenboden gewährleistet. Es können jedoch auch Zement oder Beton eingesetzt werden. Durch das Ausgießen mit z.B. Beton kann ein Stabilisierung gegen Kräfte und Momente bei Betrieb des Roboters erreicht werden

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: eine Draufsicht auf eine Ausgangsplatte eines erfindungsgemäßen Teilesatzes,
- Fig. 2: eine Draufsicht auf eine mit der in Figur 1 dargestellten Ausgangsplatte aufgebaute Konsole ohne Distanzmittel,
- Fig. 3: eine perspektivische Ansicht der in Figur 2 dargestellten Konsole,
- Fig. 4: eine weitere Ausgestaltung einer Konsole, die ebenfalls mit der in Figur 1 gezeigten Ausgangsplatte aufgebaut ist, hier jedoch unter Verwendung von Distanzmitteln,
- Fig. 5: eine Draufsicht auf die Ausführungsform der Fig. 4,
- Fig. 6: eine Seitenansicht auf die Ausführungsform der Fig. 4.

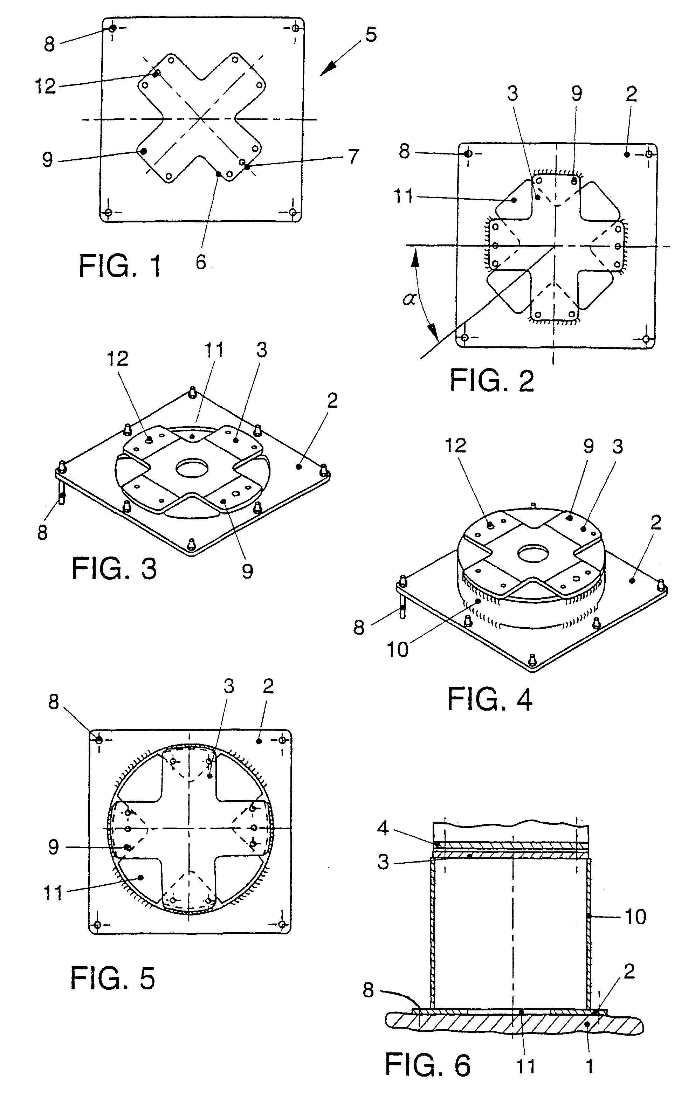

In Fig. 1 ist eine Ausgangsplatte 5 dargestellt, die einen ersten äußeren Bereich und einen zweiten inneren Bereich aufweist, wobei die Bereiche durch einen umlaufenden Spalt 6 voneinander getrennt sind. Der zweite Bereich hat eine kreuzförmige Kontur. Er kann im Bereich der Enden des Kreuzes über Stege 7 mit dem ersten Bereich verbunden sein, um einen gemeinsamen Transport der beiden Bereiche zu ermöglichen. In diesem Fall müssen die beiden Bereiche vor der Montage der Konsole getrennt werden, indem die Stege durchtrennt werden. Alternativ dazu können die beiden Bereiche bereits bei der Herstellung des Spalts voneinander getrennt sein.

Eine derartige Ausgangsplatte 5 kann zum Aufbau einer Konsole für die Einrichtung und Lagerung einer auf einem Boden nach einem Ausrichten ortsfest zu positionierenden Maschine verwendet werden. Insbesondere werden über derartige Konsolen Fertigungsroboter über Befestigungsmittel 8 mit einem Boden 1 einer Halle verbunden. Hierzu besteht die Konsole im wesentlichen aus einer Grundplatte 2 und einer Befestigungsplatte 3, wobei die aufzustellende Maschine mit einer Ansatzplatte 4 über Aufnahmemittel 9 an der Befestigungsplatte 3 befestigt wird und anschließend die Befestigungsplatte 3 relativ zur Grundplatte 2 ausgerichtet wird und dann mit ihr, zum Beispiel durch eine Schweißverbindung, verbunden wird.

Zum Aufbau der Konsole, wie sie zum Beispiel in den Figuren 2, 3 und 4 dargestellt ist, kann die in Figur 1 gezeigte Ausgangsplatte 5 verwendet werden. Hierzu wird aus dieser Ausgangsplatte 5 zunächst die Grundplatte 2 und die Befestigungsplatte 3 hergestellt, wobei eventuell vorhandene Stege 7 durchtrennt werden. Die Ausgangsplatte 5 kann hierfür bereits durch Einarbeiten der Befestigungsmittel 8 und der Aufnahmemittel 9 vorbearbeitet sein. Besonders vorteilhaft ist dabei, daß diese Bearbeitungen sowohl für die Befestigungsmittel 8 der Grundplatte 2 als auch der Aufnahmemittel 9 der Befestigungsplatte 3 weitgehend auf einer Maschine unter Einsparung von Rüstzeiten vorgenommen werden können. Alternativ dazu können diese auch vor Ort angebracht werden.

In den Figuren 2 und 3 ist eine aus der Ausgangsplatte aus Figur 1 aufgebaute Konsole dargestellt. Die Befestigungsplatte 3 wurde aus der Ebene der Grundplatte 2 herausgenommen und um einen Winkel α gedreht. Durch die unrunde Form der Außenkontur des zweiten Bereichs entstehen hierdurch Überlappungen der beiden Platten, die für die Befestigung genutzt werden können. Im Falle der gezeigten Ausgestaltung wurde die Befestigungsplatte 3 nach Ausrichten des bereits aufgestellten (und hier der Übersichtlichkeit wegen nicht dargestellten) Roboters mit der Grundplatte 2 verschweißt. Eine Höhenjustage durch die Verwendung eines Distanzmittels 10 war hier nicht notwendig.
Die durch die Herausnahme der Befestigungsplatte 3 entstandene Ausnehmung 11 kann zur Stabilisierung in den Hallenboden 1 mit einer fließfähigen, aushärtbaren Masse ausgegossen werden. Bei der dargestellten Ausführungsform werden die Befestigungsmittel 8 von jeweils 3 längs der Außenkanten der Grundplatte 2 angeordneten Schraubverbindungen gebildet, während die Aufnahmemittel der Befestigungsplatte 3 aus jeweils 2 an den Auslegern des Kreuzes angeordneten Gewinden bestehen. Zusätzlich sind zur Fixierung der Orientierung der Ansatzplatte 4 zwei Zentrierstifte 12 vorgesehen.

In Figuren 4, 5 und 6 ist eine Konsole dargestellt, die sehr ähnlich zu der in den Figuren 2 und 3 dargestellten Ausführungsform ist. Auch diese Konsole kann aus der in Figur 1 gezeigten Ausgangsplatte 5 aufgebaut werden, hier sind jedoch zur Einstellung der Standhöhe der aufzustellenden Maschine bzw. des Roboters zusätzlich zwischen der Befestigungsplatte 3 und der Grundplatte 2 Distanzmittel 10 vorgesehen, die einen bestimmten Abstand beider gewährleisten. Die Distanzmittel 10 werden hier durch ein Rohr gebildet, das mit der Grundplatte 2 einerseits und der um den Winkel α gedrehten Befestigungsplatte 3 andererseits verschweißt ist.

### BEZUGSZEICHENLISTE

- 1: Boden
- 2: Grundplatte
- 3: Befestigungsplatte
- 4: Ansatzplatte
- 5: Ausgangsplatte
- 6: Spalt
- 7: Steg
- 8: Befestigungsmittel
- 9: Aufnahmemittel
- 10: Distanzmittel
- 11: Ausnehmung
- 12: Zentrierstift

- α: Verdrehwinkel zwischen Befestigungsplatte und Ausnehmung

## Patentansprüche

1. Teilesatz zum Aufbau einer Konsole für die Einrichtung und Lagerung einer auf einem Boden nach einem Ausrichten ortsfost zu positionierenden Maschine, insbesondere einer industriellen Fertigungsmaschine oder eines Industrieroboters, mit einer im wesentlichen ebenen Grundplatte (2), die mit dem Boden (1) verbindbar ist und Befestigungsmittel (8) für die Verbindung mit dem Boden (1) aufweist, und einer Befestigungsplatte (3), die Aufnahmemittel (9) zum Verbinden mit einer Ansatzplatte (4) der Maschine ausweist, wobei die Grundplatte unmittelbar oder mittelbar über Distanzmittel (10) mit der Befestigungsplatte (3) zur Bildung der Konsole verbindbar ist, **dadurch gekennzeichnet, daß**
die Grundplatte (2) und die Befestigungsplatte (3) von einer ebenen Ausgangsplatte (5) gebildet sind, wobei die Ausgangsplatte (5) einen die Befestigungsmittel (B) aufweisenden ersten Bereich und einen die Aufnahmemittel (9) aufweisenden zweiten Bereich aufweist, die über einen durch Stage (7) unterbrochenen Spalt (6) voneinander getrennt sind, und wobei durch Durchtrennen der Stage aus dem ersten Bereich die Grundplatte (2) und nach dem Herausnehmen des so von dem erslen Bereich gotronnten zweiten Bereichs aus dem zweiten Bereich unter Zurücklassen einer Ausnehmung (11) die Befestigungsplatte (3) herstellbar ist.

2. Teilesatz nach Anspruch 1, **dadurch gekennzeichnet, daß** der Verlauf und die Breite des Spaltes (6) derart ausgebildet sind, daß die Befestigungsplatte (3) nach Herausnohmen aus der Ausgangsplatte (5) und anschließendem Drehen an zumindest drei, nicht auf einer Geraden angeordneten Punkten die Begrenzung der Ausnahmung (11) überdeckt.

3. Teilesatz nach einem der vorangegangenen Ansprüche, **dadurch gekennzeichnet, daß** der Spalt (5) im wesentlichen eine konstante Breite aufweist.

4. Tellesatz nach Anspruch 2 oder 3, **dadurch gekennzeichnet, daß** der Spalt (6) eine im wesentlichen sternartige oder kreuzartige Form aufweist und die Stege (7) an den äußeren Bereichen dieser sternartigen oder kreuzartigen Form angeordnet sind.

5. Teilesatz nach einem der vorangegangenen Ansprüche, **dadurch gekennzeichnet, daß** die Ausgangsplatte (5) mit zumindest einem, innerhalb des ersten Bereiches rechtwinklig hervorspringenden Zentrlerstift (12) vorsehen ist, der die Orientierung, in der die Ansatzplatte (4) auf die spätere Befestigungsplatte (3) aufsetzbar ist, festlegt.

6. Konsole für die Einrichtung und Lagerung einer auf einem Boden nach einem Ausrichten ortsfest zu positionierenden Maschine, insbesondere einer industriellen Fertigungsmaschine oder eines industrieroboters, die aus einem Teilesatz nach einem der Ansprüche 1 bis 5 aufgebaut ist, wobei die Befestigungsplatte (3) entweder mittelbar über ein Distanzmittel (10) oder unmittelbar mit der Grundplatte (2) verbunden ist, **dadurch gekennzeichnet, daß** die Befestigungsplatte (3) eine Außenkontur aufweist, die im wesentlichen der Kontur des inneren Randes der Ausnehmung (11) entspricht und relativ zur Ausnehmung (11) um einen Winkel (α) verdreht angeordnet ist.

7. Konsole nach Anspruch 6, wobei die Befestigungsplatte (3) über Distanzmittel (10) mit der Grundplatte (2) verbunden ist, **dadurch gekennzeichnet, daß** die Distanzmittel (10) von einem insbesondere hohlen Zylinder gebildet sind, der über Schweißverbindungen mit der Grundplatte (2) und der Betestigungsplatte (3) verbunden ist.

8. Konsole nach Anspruch 6, wobai die Befestigungsplatte (3) über Distanzmittel (10) mit der Grundplatte (2) verbunden ist, **dadurch gekennzeichnet, daß** die Distanzmittel (10) von zumindest zwel, im wesentlichen rechtwinklig zur Grundplatte (3) angeordneten Distanzplatten gebildet sind, die über Schweißverbindungen mit der Grundplatte (2) und der Befestigungsplatte (3) verbunden sind.

9. Verfahren zur Herstellung einer Konsole nach Anspruch 7 oder 8, **gekennzeichnet durch** die Verfahrensschritte Durchtrennen der Stege (7) zum Trennen des ersten Bereichs der Ausgangsplatte (5) vom zweiten Bereich der Ausgangsplatte (5), Herausnehmen, Drehen und Ausrichten der Befestigungsplatte (3) und Verbinden der Befestigungsplatte (3) mit der Grundplatte (2).

10. Verfahren nach Anspruch 9, **dadurch gekennzeichnet, daß** nach dem Herausnehmen der Befestigungsplatte zunächst Distanzmittel (10) mit einer gewünschten Höhe auf die Grundplatte (2) aufgesetzt werden, diese anschließend insbesondere durch eine Schweißverbindung mit der Grundplatte (2) verbunden werden und anschließend die um den Winkel (α) verdrehte und ausgerichtete Befestigungsplatte (3) auf die Distanzmittel (10) aufgesetzt werden und anschließend, wiederum insbesondere durch eine Schweißverbindung den Distanzmitteln (10) oder dem Distanzmittel (10) verbunden werden.

11. Verfahren nach Anspruch 9 oder 10, **dadurch gekennzeichnet**, das vor dem Durchtrennen der Stege (7) die Ausgangsplatte (5) im ersten Bereich mit den insbesondere von Durchgangsbohrungen oder durchgängigen Gewinden gebildeten Befestigungsmitteln (8) und im zweiten Bereich mit den insbesondere von Durchgangsbohrungen oder durchgängigen Gewinden gebildeten Aufnahmemitteln (9) versehen wird und dann insbesondere durch Brenn- oder Laserstrahlschneiden der Spalt (6) unter Auslassung der Stege (7) in die Ausgangsplatte (5) eingeschnitten wird.

12. Verfahren zum Aufstellen einer auf einem Boden nach dem Ausrichten ortsfest zu positionierenden Maschine, insbesondere einer industriellen Fertigungsmaschine oder eines Industrieroboters, **dadurch gekennzeichnet, daß** zunächst die Konsole nach einem der Ansprüche 9 bis 11 hergestellt wird und dann die durch Herausnehmen der Befestigungsplatte (3) entstandene Ausnehmung (11) mit einem zunächst im wesentlichen flüssigen, später erstarrenden Ausgleichsmedium ausgegossen und die Maschine auf der Konsole aufgestellt wird.

## Claims

1. Set of parts for constructing a console for setting up and mounting a machine, in particular an industrial manufacturing machine or an industrial robot, which is to be positioned in a fixed location on a floor after being aligned, having an essentially planar base plate (2) which can be connected to the floor (1) and has fastening means (8) for the connection to the floor (1), and a fastening plate (3) which has receiving means (9) for connecting it to an attachment plate (4) of the machine, it being possible for the base plate to be connected to the fastening plate (3) directly or indirectly via spacer means (10) in order to form the console, **characterized in that** the base plate (2) and the fastening plate (3) are formed by a planar starting plate (5), the starting plate (5) having a first region having the fastening means (8) and a second region having the receiving means (9), which regions are separated from each other by a gap (6) interrupted by webs (7), and it being possible for the base plate (2) to be produced from the first region by severing the webs and, after removal of the second region thus separated from the first region, for the fastening plate (3) to be produced from the second region with a recess (11) being left.

2. Set of parts according to Claim 1, **characterized in that** the profile and the width of the gap (6) are designed in such a manner that the fastening plate (3), after removal from the starting plate (5) and subsequent rotation, covers the boundary of the recess (11) at at least three points not arranged on a straight line.

3. Set of parts according to one of the preceding claims, **characterized in that** the gap (6) has essentially a constant width.

4. Set of parts according to Claim 2 or 3, **characterized in that** the gap (6) has an essentially star-like or cross-like shape, and the webs (7) are arranged at the outer regions of this star-like or cross-like shape.

5. Set of parts according to one of the preceding claims, **characterized in that** the starting plate (5) is provided with at least one centring pin (12) which protrudes at right angles within the first region and defines the orientation at which the attachment plate (4) can be placed onto the subsequent fastening plate (3).

6. Console for setting up and mounting a machine, in particular an industrial manufacturing machine or an industrial robot, which is to be positioned on a floor in a fixed location after being aligned, the console being constructed from a set of parts according to one of Claims 1 to 5, with the fastening plate (3) being connected to the base plate (2) either indirectly via a spacer means (10) or directly, **characterized in that** the fastening plate (3) has an outer contour which corresponds essentially to the contour of the inner edge of the recess (11) and is arranged rotated through an angle (α) relative to the recess (11).

7. Console according to Claim 6, with the fastening plate (3) being connected to the base plate (2) via spacer means (10), **characterized in that** the spacer means (10) are formed by a cylinder, in particular a hollow cylinder, which is connected to the base plate (2) and the fastening plate (3) via welded connections.

8. Console according to Claim 6, with the fastening plate (3) being connected to the base plate (2) via spacer means (10), **characterized in that** the spacer means (10) are formed by at least two spacer plates which are arranged essentially at right angles with respect to the base plate (2) and are connected to the base plate (2) and the fastening plate (3) via welded connections.

9. Method for producing a console according to Claim 7 or 8, **characterized by** the method steps of severing the webs (7) in order to separate the first region of the starting plate (5) from the second region of the starting plate (5), removing, rotating and aligning the fastening plate (3) and connecting the fastening plate (3) to the base plate (2).

10. Method according to Claim 9, **characterized in that** after the fastening plate has been removed, spacer means (10) are first of all placed onto the base plate (2) at a desired height, they are then connected to the base plate (2) in particular by a welded connection, and subsequently the fastening plate (3), which is rotated through the angle (α) and is aligned, is placed onto the spacer means (10) and is subsequently connected to the one or more spacer means (10) again in particular by means of a welded connection.

11. Method according to Claim 9 or 10, **characterized in that**, prior to the severing of the webs (7), the starting plate (5) is provided in the first region with the fastening means (8), which are formed, in particular, by through-holes or continuous threads, and is provided in the second region with the receiving means (9) formed, in particular, by through-holes or continuous threads, and then the gap (6) is cut into the starting plate (5) leaving the webs (7) by means of flame cutting or laser beam cutting, in particular.

12. Method for erecting a machine, in particular an industrial manufacturing machine or an industrial robot, which is to be positioned on a floor in a fixed location after being aligned, **characterized in that** first of all the console according to one of Claims 9 to 11 is produced and then the recess (11) produced by removing the fastening plate (3) is cast with an expansion medium which is initially essentially liquid and subsequently becomes solidified, and the machine is erected on the console.

## Revendications

1. Jeu de pièces pour la construction d'une console pour la disposition et le montage d'une machine devant être positionnée de manière fixe sur un sol après son orientation, en particulier d'une machine de fabrication industrielle ou d'un robot industriel, comprenant un socle essentiellement plan (2) qui peut être fixé au sol (1) et qui présente des moyens de fixation (8) pour la fixation au sol (1), et une plaque de fixation (3) qui présente des moyens de réception (9) pour la fixation à une plaque d'embase (4) de la machine, le socle pouvant être fixé directement ou indirectement par le biais de moyens d'espacement (10) à la plaque de fixation (3) pour former la console, **caractérisé en ce que**
le socle (2) et la plaque de fixation (3) sont formés par une plaque de départ plane (5), la plaque de départ (5) présentant une première partie présentant les moyens de fixation (8) et une deuxième partie présentant les moyens de réception (9), lesquelles sont séparées par une fente (6) interrompue par des nervures (7), et la séparation des nervures de la première partie permettant de créer le socle (2), et après l'enlèvement de la deuxième partie ainsi séparée de la première partie, de créer la plaque de fixation (3) à partir de la deuxième partie, en laissant un évidement (11).

2. Jeu de pièces selon la revendication 1, **caractérisé en ce que** l'étendue et la largeur de la fente (6) sont conçues de telle sorte que la plaque de fixation (3), après son enlèvement de la plaque de départ (5) et sa rotation subséquente, recouvre sur au moins trois points non alignés, la délimitation de l'évidement (11).

3. Jeu de pièces selon l'une quelconque des revendications précédentes, **caractérisé en ce que** la fente (6) présente essentiellement une largeur constante.

4. Jeu de pièces selon la revendication 2 ou 3, **caractérisé en ce que** la fente (6) présente une forme essentiellement en forme d'étoile ou de croix et les nervures (7) sont disposées sur les parties extérieures de cette forme en étoile ou en croix.

5. Jeu de pièces selon l'une quelconque des revendications précédentes, **caractérisé en ce que** la plaque de départ (5) est pourvue d'au moins une broche de centrage (12) saillant à angle droit à l'intérieur de la première partie, laquelle fixe l'orientation suivant laquelle la plaque d'embase (4) peut être placée sur la plaque de fixation ultérieure (3).

6. Console pour la disposition et le montage d'une machine devant être positionnée de manière fixe sur un sol après son orientation, en particulier d'une machine de fabrication industrielle ou d'un robot industriel, constituée d'un jeu de pièces selon l'une quelconque des revendications 1 à 5, la plaque de fixation (3) étant fixée directement ou indirectement par le biais d'un moyen d'espacement (10) au socle (2), **caractérisée en ce que** la plaque de fixation (3) présente un contour extérieur qui correspond essentiellement au contour du bord intérieur de l'évidement (11) et est tournée d'un angle (α) par rapport à l'évidement (11).

7. Console selon la revendication 6, dans laquelle la plaque de fixation (3) est fixée au socle (2) par le biais de moyens d'espacement (10), **caractérisée en ce que** les moyens d'espacement (10) sont formés par un cylindre notamment creux qui est fixé au socle (2) et à la plaque de fixation (3) par le biais de raccords soudés.

8. Console selon la revendication 6, dans laquelle la plaque de fixation (3) est fixée au socle (2) par le biais de moyens d'espacement (10), **caractérisée en ce que** les moyens d'espacement (10) sont formés par au moins deux plaques d'espacement disposées esentiellement perpendiculairement au socle (2), lesquelles sont fixées au socle (2) et à la plaque de fixation (3) par le biais de raccords soudés.

9. Procédé de fabrication d'une console selon la revendication 7 ou 8, **caractérisé par** les étapes de procédé suivantes : séparation des nervures (7) pour la séparation de la première partie de la plaque de départ (5) de la deuxième partie de la plaque de départ (5), enlèvement, rotation et orientation de la plaque de fixation (3) et fixation de la plaque de fixation (3) au socle (2).

10. Procédé selon la revendication 9, **caractérisé en ce qu'**après l'enlèvement de la plaque de fixation, les moyens d'espacement (10) sont d'abord placés sur le socle (2) avec une hauteur souhaitée, puis ceux-ci sont fixés au socle (2) notamment par un raccord soudé, et ensuite la plaque de fixation (3) tournée de l'angle (α) et orientée est placée sur les moyens d'espacement (10) et est ensuite fixée aux moyens d'espacement (10) ou au moyen d'espacement (10), à nouveau notamment par un raccord soudé.

11. Procédé selon la revendication 9 ou 10, **caractérisé en ce qu'**avant la séparation des nervures (7), la plaque de départ (5) est pourvue, dans la première partie, des moyens de fixation (8) formés notamment par des perçages traversants ou des filetages traversants, et dans la deuxième partie, des moyens de réception (9) formés notamment par des perçages traversants ou des filetages traversants, et ensuite la fente (6) est découpée notamment par découpage au chalumeau ou au faisceau laser en laissant les nervures (7) dans la plaque de départ (5).

12. Procédé d'installation d'une machine devant être positionnée de manière fixe sur un sol après son orientation, en particulier d'une machine de fabrication industrielle ou d'un robot industriel, **caractérisé en ce que** la console selon l'une quelconque des revendications 9 à 11 est d'abord construite, puis, l'évidement (11) produit par l'enlèvement de la plaque de fixation (3) est rempli d'un milieu d'égalisation d'abord essentiellement liquide, puis se solidifiant, et la machine est placée sur la console.
